# EUROPÄISCHE PATENTSCHRIFT

(11) **EP 1 435 816 B1**
(45) Veröffentlichungstag und Bekanntmachung des Hinweises auf die Patenterteilung: **14.02.2007**
(21) Anmeldenummer: 02801297.9
(22) Anmeldetag: 30.09.2002
(51) Int. Cl.: A47J 43/12

(54) **GERÄT ZUR ERZEUGUNG UND ENTNAHME VON SCHLAGSAHNE**
DEVICE FOR PRODUCTION AND APPLICATION OF WHIPPED CREAM
APPAREIL POUR PRODUIRE ET PRELEVER DE LA CREME FOUETTEE

(30) Priorität: 17.10.2001 CH 19062001
(43) Veröffentlichungstag der Anmeldung: 14.07.2004
(73) Patentinhaber: Steiner AG Weggis, 6353 Weggis (CH)
(72) Erfinder: FRICKER, Robert, CH-6403 Küssnacht (CH)
(74) Vertreter: Luchs, Willi
(86) Internationale Anmeldenummer: PCT/EP2002/010956
(87) Internationale Veröffentlichungsnummer: WO 2003/032796

(56) Entgegenhaltungen:
- DE-C- 3 521 982
- US-A- 4 766 739

## Beschreibung

Die Erfindung betrifft ein Gerät zur Erzeugung und Entnahme von Schlagsahne gemäss dem Oberbegriff des Anspruches 1.

Bei einer bekannten Maschine zum Aufschlagen schaumiger Massen, insbesondere Schlagsahne, gemäss der DE-C1 35 21 982 ist in einem Gehäuse eine von einem Kompressor angetriebene Kühlmaschine angeordnet, mittels der ein vom Gehäuse gebildeter Raum gekühlt wird, in welchen ein die flüssige Sahne aufnehmender Sahnekessel hineinstellbar ist. In letzteren ragt dabei eine Steigrohrleitung, die zum Gerätekopf der Maschine führt, welcher eine die flüssige Sahne aufschlagende Vorrichtung enthält und mit einem senkrecht nach unten verlaufenden Auslaufrohr verbunden ist.

Bei dieser bekannten Maschine wird die im Kessel befindliche flüssige Sahne von einer Pumpe durch die Steigrohrleitung angesogen und zusammen mit ebenfalls angesaugter Luft durch die aus mehreren Widerstandsrohren bestehende Vorrichtung gepresst. Dadurch wird die flüssige Sahne zu Schlagsahne verarbeitet und kann folglich durch das am Gerätekopf befestigte Auslaufrohr mittels einem Betätigungsorgan, bspw. per Knopfdruck, dosiert ausgelassen werden. Nachteilig hierbei ist für einen Benützer, dass er bei der Sahne-Entnahme gezwungen ist, einen Teller, eine Tasse oder dergleichen unter dieses auf der Frontseite der Maschine festsitzende Auslaufrohr zu stellen.

Es sind bereits Geräte bekannt, bei denen das Auslaufrohr über einen Verbindungsschlauch an den Gerätekopf koppelbar ist. Dadurch kann dieses Auslaufrohr bis auf eine gewisse Distanz vom Gerät weggenommen und der Schlagsahne infolgedessen auf einen Teller, eine Tasse oder dergleichen ausgelassen werden, ohne dass jeder Teller unmittelbar vor das Gerät gestellt zu werden braucht. Bei Nichtgebrauch eines solchen Gerätes verbleibt jedoch im Schlauch geschlagene Sahne, die nicht gekühlt ist, und der daher relativ schnell ungeniessbar wird. Beim erneuten Auslassen kann möglicherweise diese während einer Weile im Schlauch verbliebene Sahne nicht mehr genutzt und muss daher entsorgt werden.

Ausgehend von diesem bekannten Gerät wurde der vorliegenden Erfindung die Aufgabe zugrundegelegt, ein solches gattungsmässiges Gerät derart weiterzubilden, dass mit ihm beim Herauslassen von geschlagener Sahne eine äusserst bedienerfreundliche und einfache Handhabung gewährleistet ist, und dass darüberhinaus bei Nichtgebrauch des Gerätes sich in dem Verbindungsschlauch nicht ungeniessbare, abgestandene Sahne bildet.

Erfindungsgemäss ist die Aufgabe durch ein Gerät mit den Merkmalen des Anspruches 1 gelöst.

Dieses erfindungsgemässe Gerät erlaubt einem Benutzer eine optimale Arbeitsweise, denn nach dem Herauslassen der geschlagenen Sahne zieht sich der Schlauch zusammen mit dem die Sahne führenden Teil des Auslasskopfes ins Gerät zurück und liegt nicht in störender Weise in dem vor dem Gerät als Arbeitsplatz dienenden Bereich. In diesem zurückgezogenen Zustand werden sowohl der Schlauch als auch einen für den Sahnedurchlass vorgesehenen Teil des Auslasskopfes und mit ihnen die in diesen verbleibende Sahne gekühlt. Die Sahne ist daher stets in frischem, wohlschmeckenden Zustand und eine Keimbildung in dem Gerät kann weitgehend verhindert werden.

Ein weiterer Vorteil besteht darin, dass beim Einstecken des Auslasskopfes in eine Öffnung des Gehäuses der in diesem ausgebildete Kühlraum geschlossen wird.

Die Erfindung sowie weitere Vorteile derselben werden nachfolgend anhand der Zeichnung näher erläutert. Es zeigen:
- Fig. 1: schematisch ein erstes Ausführungsbeispiel eines erfindungsgemässen Gerätes im Längsschnitt;
- Fig. 2: einen Schnitt nach Linie II-II in Fig. 1;
- Fig. 3: eine der Fig. 1 entsprechende Darstellung des Gerätes in einer Gebrauchsstellung;
- Fig. 4: schematisch ein zweites Ausführungsbeispiel eines erfindungsgemässen Gerätes im Längsschnitt;
- Fig. 5: einen teilweisen Längsschnitt durch einen Auslasskopf des Gerätes nach Fig. 4; und
- Fig. 6: einen teilweisen Längsschnitt durch einen Auslasskopf sowie die Frontseite eines alternativen Gerätes.

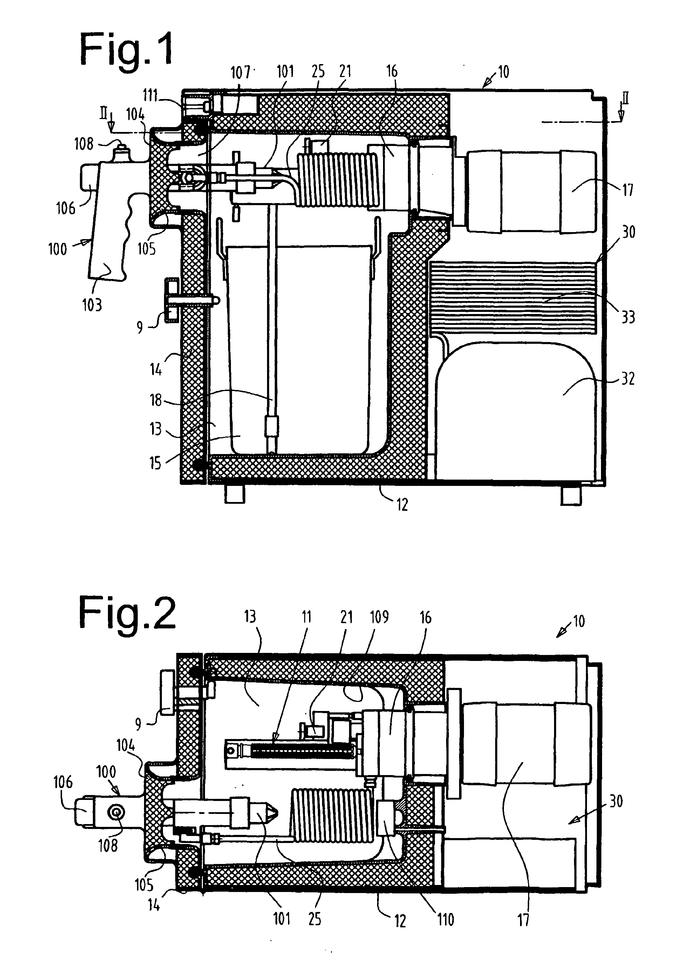

Fig.1 zeigt ein schematisch veranschaulichtes Gerät 10 zur Erzeugung und Entnahme von Schlagsahne, welches ein Gehäuse 12 aufweist. Im hinteren Bereich des Gerätes 10 befindet sich eine Kühlvorrichtung 30 sowie ein über dieser angeordneter Elektromotor 17 als Antriebsorgan für eine die Sahne fördernde Pumpe 16. Im vorderen Bereich des Gerätes 10 ist ein geschlossener, vorzugsweise wärmeisolierter Kühlraum 13 gebildet, in welchem ein die flüssige Sahne aufnehmender Sahnebehälter 15 angeordnet ist, und in dem in einer besonders vorteilhaften Weise auch die Pumpe 16 untergebracht ist. Der Sahnebehälter 15 kann über einen an der Frontseite des Gerätes 10 angeordneten, verschwenkbaren Deckel 14 aus diesem Kühlraum 13 herausgenommen bzw. in diesen hineingestellt werden. Dabei ist darauf zu achten, dass eine einlasseitig an die Pumpe 16 angeschlossene Ansaugleitung 18 für die Sahne ins Innere des Sahnebehälters 15 gelegt wird. Die Türe 14 ist in der geschlossenen Stellung mittels eines Verriegelungselementes 9 verschliessbar angeordnet.

Im Kühlraum 13 ist ferner ein mit der Pumpe 16 verbundenes Mittel 11 (vgl. Fig. 2) untergebracht, das als Widerstandsdurchlasselement in seiner Ausbildung und Funktionsweise an sich bekannt ist und daher nicht in jeder Einzelheit beschrieben wird. Es ist grundsätzlich als ein länglicher Zylinder geformt und bildet einen entlang seiner Längsachse verlaufenden ringförmigen Labyrinthdurchlass, durch den die flüssige Sahne sowie Luft ausgehend von der beispielsweise als Zahnradpumpe vorgesehenen Pumpe 16 gepresst und somit geschlagen wird.

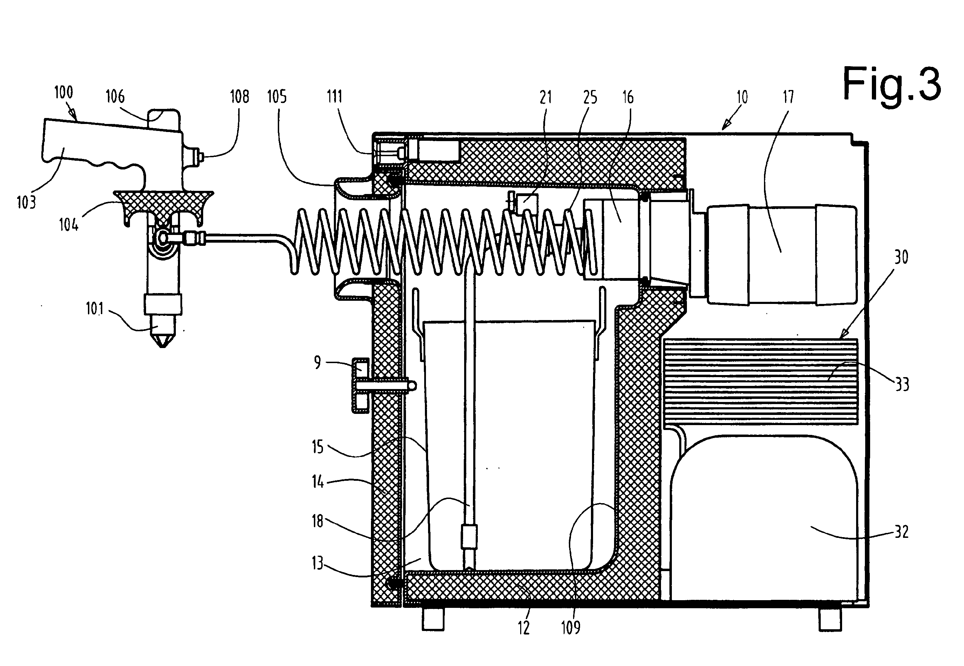

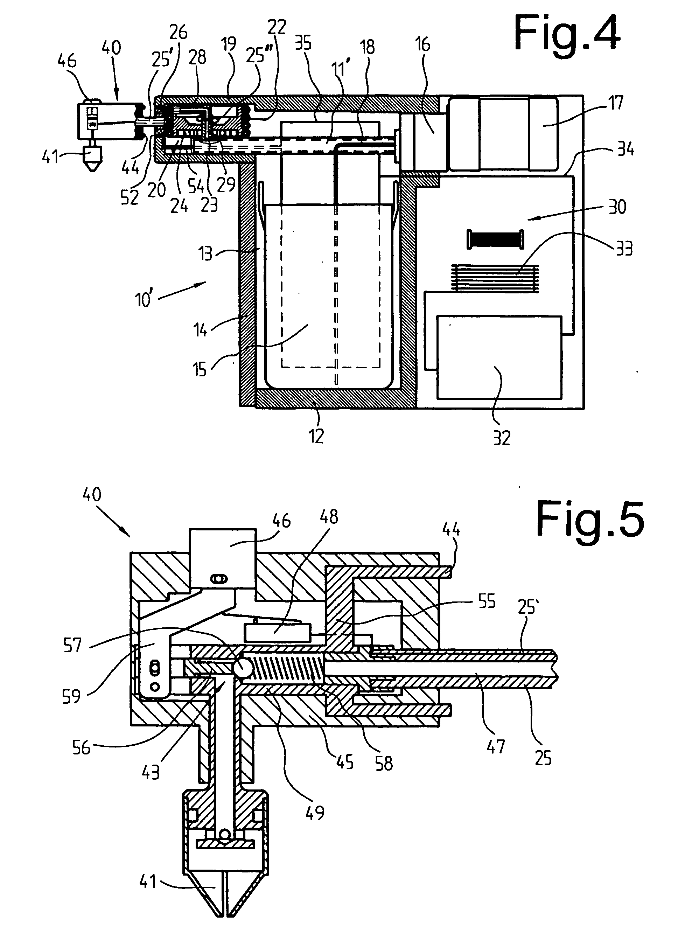

Bei dem in Fig. 1 bis 3 dargestellten Ausführungsbeispiel ist das Widerstandsdurchlasselement 11, welches für eine erfolgreiche Erzeugung der Schlagsahne eine bestimmte Mindestlänge aufweisen muss, in einer besonders vorteilhaften Weise in zwei übereinander liegende, nacheinander geschaltete Abschnitte unterteilt, so dass seine Gesamtlänge kurz gehalten werden kann, was eine positive Auswirkung auf die Grösse des Gehäuses 12 mit sich bringt und z.B. auch ein problemloses Unterbringen der Pumpe 16 im Kühlraum 13 ermöglicht. Dem oberen, von der Pumpe 16 nach vorne, gegen die Frontseite des Gerätes 10 hin, gerichteten Abschnitt des Widerstandsdurchlasselementes 11 wird Luft über ein Luftventil 21 zugeführt. Der im vorderen Bereich mit dem oberen Abschnitt verbundene untere Abschnitt des Widerstandsdurchlasselementes 11 ist in seinem hinteren Bereich an einen Schlauch 25 angeschlossen, der an seinem anderen, auslassseitigen Ende mit einem Auslasskopf 100 verbunden ist, aus dessen Auslassdüse 101 (vgl. insbesondere Fig. 3) die geschlagene Sahne per Knopfdruck entnommen werden kann, wie weiter unten anhand des in Fig. 5 dargestellten Beispieles eines Auslasskopfes 40 näher beschrieben wird. Der entsprechende Druckknopf ist in Fig. 1 und 3 mit 106 bezeichnet; es ist ausserdem ein weiterer Druckknopf 108 für einen Dauerauslass vorhanden.

Der Auslasskopf 100 kann über den als schraubenförmige Zugfeder ausgebildeten, bezüglich des zum Gerät 10 ein- und ausziehbaren Schlauches 25 je nach Bedarf am Gerät gehalten oder von diesem von Hand bis auf eine bestimmte Distanz weggenommen werden (beide Stellungen vgl. Fig. 1 und 3). Zu diesem Zweck ist der Auslasskopf 100 mit einem Handgriff 103 sowie mit einem ringförmigen, zur Auslassdüse 101 konzentrischen Steckflansch 104 versehen, wobei der letztere beim Nichtgebrauch des Auslasskopfes 100 in eine mit einer Steckhülse 105 versehenen Öffnung 107 in der Frontseite des Gehäuses 12 bzw. in der Türe 14 eingesteckt wird (Fig. 1) und den Kühlraum 13 dichtend abschliesst. Der Handgriff 103 ist gegenüber der Achse der Auslassdüse 101 abgewinkelt, wodurch der Auslasskopf 100 eine pistolenähnliche Form aufweist. Der Schlauch 25 ist gelenkig mit dem Auslasskopf 100 verbunden, so dass der Auslasskopf 101 über den Handgriff 103 aus der Steckhülse 105 herausgenommen und beispielsweise in die in Fig. 3 gezeigte Stellung, in der die Auslassdüse 101 nach unten gerichtet ist, geschwenkt werden kann, um die geschlagene Sahne in ein daruntergestelltes oder daruntergehaltenes Glas, eine Tasse oder einen Teller zu füllen.

Nach dem Gebrauch kann der Auslasskopf 100 mit dem Steckflansch 104 wieder in die Steckhülse 105 eingesteckt werden, wobei sich der Schlauch 25 selbsttätig zurückzieht. In diesem eingezogenem Zustand befinden sich sowohl der Schlauch 25 als auch die die Durchflussöffnung für den Sahnedurchlass bildende und in der Auslassdüse 101 endende Rohrwandung des Auslasskopfes 100 vollständig im Kühlraum 13 und werden somit zusammen mit der in ihnen verbliebenen Schlagsahne gekühlt. Da auch die Pumpe 16 im Kühlraum 13 untergebracht ist, werden alle Teile, durch welche die Sahne geführt wird, in einer besonders einfachen Weise gekühlt gehalten.

Die mit der Steckhülse 105 versehenen Öffnung 107 für den Auslasskopf 100 bzw. den Schlauch 25 ist mit Vorteil dem obersten Bereich des Kühlraumes 13 zugeordnet, damit die thermischen Verluste im Kühlraum 13 beim herausgezogenen Auslasskopf 100 möglichst klein gehalten werden.

Die bereits erwähnte Kühlvorrichtung 30 zur Kühlung des Kühlraumes 13 ist an sich bekannt und umfasst im wesentlichen einen Kompressor 32 sowie einen Wärmetauscher 33, die in nicht näher dargestellten Weise mit Kühlwänden des Kühlraumes 13 wirkverbunden sind. Diese können beispielsweise durch eine innerhalb des Kühlraumes 13 angeordnete, in Draufsicht U-förmige und nach vorne offene Schutzschale 109 aus Kunststoff (Fig. 2) geschützt sein. Die Temperatur im Kühlraum wird vorzugsweise auf 4°C eingestellt.

Zur Verbesserung der Luftzirkulation wird im Kühlraum 13 mit Vorteil ein Ventilator 110 (Fig. 2) untergebracht.

An der Frontseite des Gerätes 10 ist vorzugsweise im oberen Bereich ein Hauptschalter 111 zum Ein- und Ausschalten des Gerätes 10 mit einem Display angeordnet.

In Fig. 4 ist eine weitere Variante eines Gerätes 10' zur Erzeugung und Entnahme von Schlagsahne schematisch dargestellt, an dessen Gerätekopf 19 ein Auslasskopf 40 vorgesehen ist, welcher eine annähernd senkrecht nach unten ausgerichtete Auslassdüse 41 aufweist, aus der wiederum durch Betätigung eines Druckknopfes 46 die geschlagene Sahne entnommen werden kann. Die in ihrer Funktion im wesentlichen gleichbleibenden Teile des Gerätes 10' sind in Fig. 4 mit den gleichen Bezugsziffern bezeichnet, wie in Fig. 1 bis 3.

Der Auslasskopf 40 ist wiederum über einen Schlauch 25' mit einem Widerstandsdurchlasselement 11' verbunden, der als ein länglicher, an die Pumpe 16 angeschlossener und in den vorderen Gerätekopf 19 hineinragender Zylinder ausgebildet ist. Im Gerätekopf 19 ist eine den Schlauch 25' aufnehmende Vorrichtung 20 untergebracht, die eine Rolle 22, eine mit dieser zusammenwirkende Spiralfeder 24, eine die Rolle 22 drehbar lagernde Hülse 23 sowie ein mit letzterer rechtwinklig verbundenes Leitungsstück 28 umfasst. Dieses Leitungsstück 28 bildet zusammen mit der Hülse 23 eine Durchlassöffnung 29, durch die diese geschlagene Sahne am Ausgang des Widerstandsdurchlasselementes 11' in den Schlauch 25' geführt wird, welcher im dargestellten Zustand um die Rolle 22 aufgewickelt ist, sich durch einen im Gerätekopf 19 angeordneten Abstreifring 26 hindurch erstreckt und im Auslasskopf 40 befestigt ist, wobei dieser Abstreifring 26 verhindert, dass allfälliger Schmutz am Schlauch ins Gehäuse 12 eindringt, und zusätzlich dient er gleichsam als Abdichtung zur Vermeidung eines Kälteaustrittes aus dem gekühlten Innern des Gehäuses 12. Die stirnseitig an der Rolle 22 angeordnete Spiralfeder 24 ist am einen Ende an der Rolle 22 und am andern Ende an der feststehenden Hülse 23 befestigt. Beim Ausziehen des von der Rolle 22 abwickelnden Schlauches 25' wird durch die bewirkte Verdrehung der Rolle 22 eine Verspannung der Spiralfeder 24 erzeugt, durch die auf den Schlauch 25' eine Kraft übertragen wird, mittels der sich dieser selbsttätig zurückzieht. Diese Federkraft ist dabei so bemessen, dass der Schlauch 25' sicher zurückgezogen wird, dass aber der am Schlauchende befestigte Auslasskopf 40 in ausgezogenem Zustand von dieser Feder 24 nicht zurückgezogen wird, wenn er vom Benutzer losgelassen wird. Im übrigen bildet das die Vorrichtung 20 aufnehmende Innere des gegenüber dem Gehäuse 12 vorstehenden Gerätekopfes 19 einen Teil des Kühlraumes 13, womit gewährleistet ist, dass der Schlauch 25' zusammen mit der in ihm verbliebenen Schlagsahne in eingezogenem Zustand gekühlt ist.

Die wiederum auf der Hinterseite des Gerätes 10' angeordnete Kühlvorrichtung 30 umfasst eine in den Kühlraum 13 führende Leitung 34 mit einem Rücklauf sowie ein nicht dargestelltes Drosselventil, mittels welchem eine im Kühlraum 13 befindliche Leitungsschlange 35 derart abgekühlt ist, dass sich im Kühlraum 13 eine einstellbare Temperatur vorzugsweise 4 Grad Celsius einstellt. Diese Leitungsschlange 35 ist - wie angedeutet - in dem Kühlraum 13 auf bekannte Art und Weise so eingesetzt, dass sie eine optimale Kälteübertragung auf die Luft im Kühlraum bewirkt.

Der Auslasskopf 40 lässt sich über Stecker 44 in einem entsprechenden Adapter 52 des Gerätekopfes 19 lösbar befestigen. Der Adapter 52 ist an eine von der Kühlvorrichtung 30 gespiesene Kälteverbindungsleitung 54 angeschlossen und bildet in eingestecktem Zustand des Auslasskopfes 40 eine Kältebrücke, die eine Übertragung der Kälte auf den Stecker 44 bewirkt.

Ferner ist im Schlauch 25' ein Elektrokabel 25" eingebettet, das im aufgewickelten Zustand des Schlauchs 25' ein paar Mal um die Hülse 23 gewunden und bis zu einem nicht gezeigten, den Elektromotor 17 ein- bzw. ausschaltenden Schalter geführt ist.

Mit diesem erfindungsgemässen Gerät kann der Auslasskopf 40 von einem Benützer von Hand gefasst, über einen Teller oder eine Tasse positioniert, eine bestimmte Sahnemenge durch Betätigung des Druckknopfes 46 herausgelassen und wieder zurück an den Gerätekopf 19 gesteckt werden, wobei sich der Schlauch 25' bei letzterem Vorgang selbsttätig ins Gehäuseinnere zurückzieht.

Der in Fig. 5 im Längsschnitt gezeigte Auslasskopf 40 hat ein geschlossenes Gehäuse 45, durch welches eine Rohrwandung 49 geführt ist, die in der Auslassdüse 41 endet, und die eine von einem Ventil 43 verschliessbare Durchflussöffnung 47 bildet. Das Ventil 43 weist eine die Durchflussöffnung 47 schliessende Kugel 57, eine auf diese in Schliessrichtung wirkende Druckfeder 58 sowie einen die Kugel 57 in Öffnungsrichtung stossenden Bolzen 56 auf, welcher über einen mechanischen Verbindungsteil 59 mit dem Druckknopf 46 gelenkig verbunden ist. Bei Betätigung des Druckknopfes 46 wird zuerst ein Mikroschalter 48 eingeschaltet, der über das Elektrokabel 25" mit dem den Elektromotor 17 in Betrieb setzenden Schalter verbunden ist. In der Folge wird die Sahne durch die ebenfalls eingeschaltete Pumpe 16 durch das Widerstandsdurchlasselement 11' gepresst und dadurch geschlagen, der durch das vom Druckknopf 46 geöffnete Ventil 43 und nachfolgend durch die Auslassdüse 41 herausgelassen wird. Sobald der Druckknopf 46 wieder losgelassen wird, stellt der Elektromotor 17 ab und das Ventil 43 wird wieder in den Schliesszustand bewegt.

Die vom Adapter 52 auf die Stecker 44 übertragene Kälteenergie wird über einen im Gehäuse 45 des Auslasskopfes 40 vorgesehenen Verbindungsteil 55 auf die Rohrwandung 49 weitergeleitet. Letztere erstreckt sich von dem im Gehäuse 45 endenden und darin befestigten Schlauch 25' bis zur Auslassdüse 41, womit nach einer Sahne-Entnahme und nach dem oben erläuterten Einstecken die in diesem Auslasskopf 40 verbleibende Sahne gekühlt ist. Beim nachfolgenden Auslassen von Sahne ist dieser nach wie vor bekömmlich und kann daher problemlos gebraucht werden. Der Stecker 44, der Verbindungsteil 55 sowie die Rohrwandung 49 sind zu diesem Zwecke aus einem kälteleitenden Material, bspw. aus einem Metall, währenddem das diese umgebende Gehäuse 45 aus einem kälteisolierenden Werkstoff, zum Beispiel Kunststoff, hergestellt ist, oder zumindest die Rohrwandung 49 mit einem solchen Material ummantelt ist. Das Gehäuse 45 des Auslasskopfes 40 ist am Aussenumfang zweckmässigerweise so gestaltet, dass es mit der Hand einwandfrei gefasst werden kann.

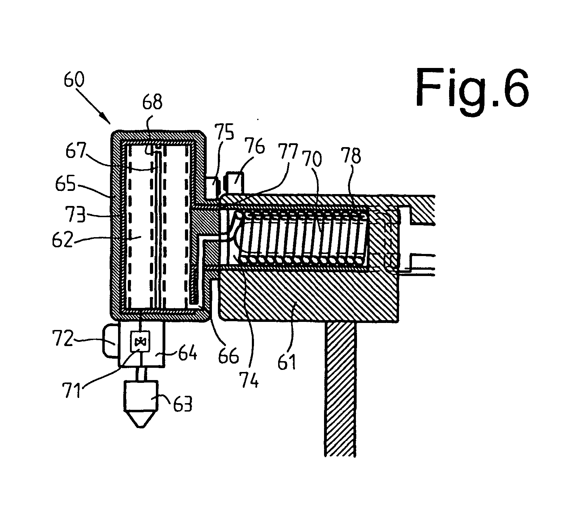

Fig. 6 zeigt einen andersartigen Auslasskopf 60, welcher an einem Gerätekopf 61 eines hier nicht näher dargestellten Gerätes aufgesteckt ist. Es handelt sich um ein im wesentlichen dem Gerät 10' nach Fig. 4 entsprechendes Gerät, das sich jedoch vor allem dadurch unterscheidet, dass ein Widerstandsdurchlasselement 62 unmittelbar im Auslasskopf 60 integriert ist. Dies ergibt den Vorteil, dass die Sahne erst vor dem Auslassen bei der Auslassdüse 63 geschlagen wird und somit eine noch bessere Haltbarkeit desselben erzielt wird. Das Widerstandsdurchlasselement 62 ist dabei zweiteilig in einem Gehäuse 65 des Auslasskopfes 60 angeordnet, und die Sahne wird ausgehend von der im Gehäuse 65 gebildeten Bohrung 66 durch den ersten Teil und nach Passieren einer Bohrung 68 in einer Zwischenwandung 67 durch den zweiten Teil des Widerstandsdurchlasselementes 62 geführt. In geschlagenem Zustand wird die Sahne sodann in Offenstellung des angedeuteten, vom Schaltknopf 72 betätigbaren Ventils 71 in einem Schalterteil 64 in die Auslassdüse 63 befördert. Die Steckverbindung 77 ermöglicht wiederum eine Kältebrücke, mittels welcher der Auslasskopf 60 aufgrund der auf der Innenseite seines Gehäuses 65 vorgesehenen kälteleitenden Auskleidung 73 gekühlt ist.

Dieser Auslasskopf 60 kann entsprechend der Erfindung wiederum vom Gerätekopf 61 entfernt werden, und zu diesem Zwecke ist an ihm ein als schraubenförmige Zugfeder ausgebildeter Schlauch 70 befestigt, welcher im gezeigten eingezogenen Zustand in einer gekühlten, im Gerätekopf 61 ausgebildeten Ausnehmung 74 plaziert ist. Diese Ausnehmung 74 ist dabei von einem Kühlring 78 umgeben, welcher mit einer Kühlleitung der Kühlvorrichtung verbunden ist. Beim Wegnehmen des Auslasskopfes 60 wird dieser Schlauch 70 mitgenommen, indessen sich beim Zurückbringen des Auslasskopfes 60 dieser Schlauch 70 selbsttätig in diese Ausnehmung 74 zurückzieht. Der Schlauch 70 ist im übrigen im Innern des Gerätegehäuses direkt an die diese Sahne fördernde Pumpe angeschlossen.

Ferner ist dieser Auslasskopf 60 für das Ein- und Ausschalten des die Pumpe betreibenden Elektromotors mit einem Infrarotsender 75 oder dergleichen ausgestattet, welcher bei Betätigung des Schaltknopfes 72 ein Signal auf den Empfängerteil 76 überträgt, der seinerseits einen Schalter des Elektromotors ein- oder ausschaltet. Anstelle eines Infrarotsenders kann selbstverständlich eine andere kabellose Signalübertragung vorgesehen sein.

Auch beim Gerät 10 nach Fig. 1 bis 3 kann die Signalübertragung vom Auslasskopf 100 auf den die Pumpe 16 ein- und ausschaltenden Elektromotor 17 - wie vorstehend beschrieben - über ein Elektrokabel oder kabellos erfolgen.

Selbstverständlich liesse sich die Erfindung noch in andern Varianten darstellen. Zur umfassenden Erläuterung der Erfindung ist sie jedoch mit den obigen Ausführungsbeispielen ausreichend dargetan.

Es sei hierbei noch erwähnt, dass die oben erläuterte Signalübertragung vom Auslasskopf zum Schalter des Elektromotors auch noch auf eine andere Art bewerkstelligt sein könnte, und zwar indem man am Ausgang des Widerstandsdurchlasselementes einen Drucksensor installieren würde, welcher ein Ein- bzw. Ausschalten des Motors und damit der Pumpe bewirken würde, wenn der vom Drucksensor gemessene Druck unter ein bestimmtes Sollniveau fällt bzw. über ein vorgegebenes Sollniveau ansteigt.

Der Auslasskopf 100 nach Fig.1 ist in seinem Innern an sich gleich wie derjenige nach Fig.5 ausgebildet. Es wurde daher auf eine diesbezügliche Darstellung verzichtet. Der für den Sahnedurchlass vorgesehene Teil des Auslasskopfes besteht aus der Rohrwandung 49 sowie der Auslassdüse 41, durch welche die Sahne hindurchfliesst.

Die Erfindung ist mit den oben erläuterten Ausführungsbeispielen ausreichend dargetan. Die Mittel für die Erzeugung der Sahne, die durch ein Widerstandsdurchlasselement realisiert sind, könnten auch anders ausgebildet sein.

## Patentansprüche

1. Gerät zur Erzeugung und Entnahme von Schlagsahne, mit einem in diesem angeordneten Sahnebehälter (15), von dem aus flüssige Sahne über eine Leitung durch ein Mittel (11; 11'; 62) für die Erzeugung der Schlagsahne und nachfolgend durch eine Auslassdüse (101; 41; 63) eines Auslasskopfes (100; 40; 60) förderbar ist, wobei an letzterem ein mit dem Gerät (10; 10') verbundener Schlauch (25; 25';70) befestigt ist, welcher mit der die Sahne fördernden Leitung verbunden ist, **dadurch gekennzeichnet, dass**
der am einen Ende mit dem Auslasskopf (100; 40; 60) verbundene Schlauch (25; 25';70) in diesem Gerät (10; 10') ein- bzw. ausziehbar angeordnet ist, wodurch der Auslasskopf (100; 40; 60) je nach Bedarf am Gerät (10; 10') gehalten oder von diesem wegnehmbar ist, und dass dieser Schlauch (25; 25';70) sowie ein für den Sahnedurchlass vorgesehener Teil des Auslasskopfes (100; 40; 60) in eingezogenem Zustand des Schlauches (25; 25';70) gekühlt gehalten sind.

2. Gerät nach Anspruch 1, **dadurch gekennzeichnet, dass** der Schlauch (25; 25'; 70) in einen Kühlraum (13; 74) des Gerätes (10; 10') selbsttätig zurückziehbar und darin in eingezogenem Zustand gekühlt ist.

3. Gerät nach Anspruch 2, **dadurch gekennzeichnet, dass** der Schlauch (25; 70) als schraubenförmige Zugfeder ausgebildet ist.

4. Gerät nach Anspruch 3, **dadurch gekennzeichnet, dass** der Auslasskopf (100) mit dem Schlauch (25) gelenkig verbunden, in ausgezogenem Zustand in eine Arbeitsstellung schwenkbar und beim Einziehen zurückgeschwenkt in eine mit einer Steckhülse (105) versehene, in den Kühlraum (13) mündende Öffnung (107) des Gerätes (10) einsteckbar ist, wobei der für den Sahnedurchlass vorgesehene Teil des Auslasskopfes (100) in eingezogenem Zustand im Kühlraum (13) untergebracht ist.

5. Gerät nach Anspruch 4, **dadurch gekennzeichnet, dass** der Auslasskopf (100) mit einem zur Auslassdüse (101) abgewinkelten, in der Art eines Pistolenhandgriffs ausgebildeten Handgriff (103) sowie mit einem in eingezogenem Zustand die in den Kühlraum (13) mündende Öffnung (107) dichtend abschliessenden Steckflansch (104) versehen ist, so dass der Kühlraum (13; 74) bei aufgestecktem Auslasskopf (100) geschlossen ist.

6. Gerät nach Anspruch 4 oder 5, **dadurch gekennzeichnet, dass** die mit der Steckhülse (105) versehene Öffnung (107) in den oberen Bereich des Kühlraumes (13) mündet, in welchem der Sahnebehälter (15), die diese Sahne fördernde Leitung (18), das Mittel (11) für die Erzeugung der Sahne sowie die Pumpe (16) angeordnet sind.

7. Gerät nach Anspruch 6, **dadurch gekennzeichnet, dass** das Mittel (11) aus einem Widerstandsdurchlasselement gebildet ist und in zwei parallel zueinander angeordnete, nacheinander geschaltete Abschnitte unterteilt ist.

8. Gerät nach Anspruch 1 oder 2, **dadurch gekennzeichnet, dass** der Auslasskopf (40; 60) in eingezogenem Zustand mit einer im Gerät (10') angeordneten Kälteverbindungsleitung (54) einer Kühlvorrichtung (30) eine Kältebrücke bildet, mittels der zumindest seine die Durchflussöffnung für den Sahnedurchlass bildende Rohrwandung (49) gekühlt wird.

9. Gerät nach Anspruch 8, **dadurch gekennzeichnet, dass** der Auslasskopf (40; 60) mittels an ihm angebrachten Steckern (44) an einen Adapter (52) am Gerätekopf (19) befestigbar ist, wobei der Adapter (52) an die Kälteverbindungsleitung (54) angeschlossen ist, wodurch im eingesteckten Zustand des Auslasskopfes (40; 60) eine Übertragung der Kälte auf die Stecker (44) und folglich über einen Verbindungsteil (55) auf die Rohrwandung (49) ausgeübt wird.

10. Gerät nach Anspruch 1 oder 2, **dadurch gekennzeichnet, dass** der Schlauch (25') von einer im Kühlraum (13) vorgesehenen Vorrichtung (20) selbsttätig in den Kühlraum (13) zurückziehbar ist, die eine im Gerätekopf (19) angeordnete Rolle (22), eine letztere drehbar lagernde Hülse (23), eine mit der Rolle (22) zusammenwirkende Spiralfeder (24) sowie ein Leitungsstück (28) umfasst, welches das zum Auslasskopf (40) gegenüberliegende Ende des Schlauchs (25') mit dem im Gerät (10') gelagerten Mittel (11) verbindet.

11. Gerät nach einem der vorhergehenden Ansprüche, **dadurch gekennzeichnet, dass** am Auslasskopf (100; 40; 60) ein Druckknopf (106; 46; 72) angebracht ist, durch dessen Betätigung einerseits eine die flüssige Sahne fördernde Pumpe (16) ein- bzw. ausgeschaltet und andererseits ein im Auslasskopf (100; 40; 60) angeordnetes Ventil (43) geöffnet bzw. geschlossen wird.

12. Gerät nach Anspruch 11, **dadurch gekennzeichnet, dass** der Druckknopf (46) im Auslasskopf (40) einen Mikroschalter (48) betätigt, der mit einem Schalter zum Ein- bzw. Ausschalten für einen die Pumpe (16) antreibenden Elektromotor (17) über ein im Schlauch (25) integriertes Elektrokabel (25') oder über eine kabellose Signalübertragung, wie über einen Infrarotsender (75, 76), verbunden ist.

13. Gerät nach einem der Ansprüche 1 bis 5, **dadurch gekennzeichnet, dass** das Mittel (62) unmittelbar im Auslasskopf (60) integriert ist.

## Claims

1. Device for production and application of whipped cream, with a cream container (15) arranged therein, from which liquid cream can be conveyed via a line through means (11; 11'; 62) for the production of whipped cream and then through an outlet nozzle (101; 41; 63) of an outlet head (100; 40; 60), whereby at said outlet head a hose (25; 25 ; 70) is secured which is connected to the device (10; 10'), said hose being connected to the line conveying the cream,
**characterised in that**
the hose (25; 25'; 70), connected at one end to the outlet head (100; 40; 60) is arranged in this device (10; 10') in such a way as to be drawn in and drawn out, as a result of which the outlet head (100; 40; 60) is, as required, held to the device (10; 10') or can be removed from it, and that this hose (25; 25'; 70), as well as a part of the outlet head (100; 40; 60) provided for the passage of the cream, are kept cool in the drawn-in state of the hose (25; 25'; 70).

2. Device according to Claim 1, **characterised in that** the hose (25; 25'; 70) can be automatically drawn back into a cooling chamber (13; 74) of the device (10; 10') and is cooled therein in the drawn-in state.

3. Device according to Claim 2, **characterised in that** the hose (25; 70) is designed as a helical tension spring.

4. Device according to Claim 3, **characterised in that** the outlet head (100) is connected to the hose (25) in jointed fashion, in the drawn-out state can be pivoted into a working position and when drawn in is pivoted back and can be inserted into an opening (107) of the device (10), provided with an insertion sleeve (105) and opening into the cooling chamber (13), whereby the part of the outlet head (100) provided for the passage of the cream is located in the drawn-in state in the cooling chamber (13).

5. Device according to Claim 4, **characterised in that** the outlet head (100) is provided with a handle (103) angled to the outlet nozzle (101) and formed in the manner of a pistol handle, as well as with a flange (104) which closes off in sealing manner an aperture (107) opening into the cooling chamber (13) in the drawn-in state, so that the cooling chamber (13; 74) is closed when the outlet head (100) is pushed on.

6. Device according to Claim 4 or 5, **characterised in that** the aperture (107) provided with the sleeve (105) opens into the upper area of the cooling chamber (13), in which are arranged the cream container (15), the line (18) conveying the cream, the means (11) for the production of the cream, and the pump (16).

7. Device according to Claim 6, **characterised in that** the means (11) are formed from a resistance passage element and are subdivided into two sections arranged parallel to one another but connected after one another in the circuit.

8. Device according to Claim 1 or 2, **characterised in that** the outlet head (40; 60) in the drawn-in state forms a cold bridge with a cold connection line (54) of a cooling device (30), arranged in the device (10') in the drawn-in state, by means of which at least the pipe wall (49) is cooled which forms the throughflow aperture for the cream flow.

9. Device according to Claim 8, **characterised in that** the outlet head (40; 60) can be secured to an adapter (52) on the device head (19) by means of plugs (44) located on it, whereby the adapter (52) is connected to the cold connection line (54), as a result of which, with the outlet head (40; 60) in the plugged-in state, a transfer of the cold to the plugs (44) is exerted, and, as a result, via a connection part (55), onto the pipe wall (49).

10. Device according to Claim 1 or 2, **characterised in that** the hose (25') can be retracted automatically into the cooling chamber (13) by a device (20) provided in the cooling chamber, which comprises the roll (22) arranged in the device head (19), a sleeve (23) mounted in rotatable fashion on said roll, a helical spring (24) interacting with the roll (22), and a line piece (28), which connects the end of the hose (25') located opposite the outlet head (40) to the means (11) mounted in the device (10').

11. Device according to one of the preceding claims, **characterised in that** a pushbutton (106; 46; 72) is located at the outlet head (100; 40; 60), by the actuation of which a pump (16) which conveys the liquid cream is switched on and off, and, on the other hand, a valve (43) arranged in the outlet head (100; 40; 60) is opened or closed respectively.

12. Device according to Claim 11, **characterised in that** the pushbutton (46) in the outlet head (40) actuates a microswitch (48), which is connected to a switch for switching on and off an electric motor (17) driving the pump (16) via an electric cable (25') integrated in the hose (25) or by means of a cableless signal transfer, such as by means of an infra-red transmitter (75, 76).

13. Device according to one of Claims 1 to 5, **characterised in that** the means (62) are integrated directly in the outlet head (60).

## Revendications

1. Appareil de génération et de prélèvement de crème fouettée, ledit appareil comprenant un récipient à crème (15) qui est placé à l'intérieur dudit appareil et duquel de la crème liquide peut être amenée par une conduite par un dispositif (11 ; 11' ; 62) permettant de générer de la crème fouettée puis par une buse de sortie (101 ; 41 ; 63) d'une tête de sortie (100 ; 40 ; 60), un tuyau (25 ; 25' ; 70) qui est relié à l'appareil (10 ; 10') étant fixé à ladite tête de sortie et étant relié à la conduite d'amenée de crème,
**caractérisé en ce que**
le tuyau (25 ; 25' ; 70) relié par une extrémité à la tête de sortie (100 ; 40 ; 60) est placé dans cet appareil (10 ; 10') de manière insérable ou extractible de sorte que la tête de sortie (100 ; 40 ; 60) est maintenue selon le besoin sur l'appareil (10 ; 10') ou peut être enlevée de celui-ci, et **en ce que** ce tuyau (25 ; 25' ; 70) ainsi qu'une partie de la tête de sortie (100 ; 40 ; 60) qui est prévue pour le passage de la crème sont maintenus à l'état froid lorsque le tuyau (25 ; 25' ; 70) est inséré.

2. Appareil selon la revendication 1, **caractérisé en ce que** le tuyau (25 ; 25' ; 70) peut être retiré automatiquement dans un compartiment frigorifique (13 ; 74) de l'appareil (10 ; 10') et est refroidi à l'intérieur lorsqu'il est inséré.

3. Appareil selon la revendication 2, **caractérisé en ce que** le tuyau (25 ; 70) est conformé en ressort de traction hélicoïdal.

4. Appareil selon la revendication 3, **caractérisé en ce que** la tête de sortie (100) est reliée de façon articulée au tuyau (25), est apte à pivoter pour être amenée dans une position de travail et, lors de l'insertion, lorsqu'elle a pivoté en sens inverse, peut être introduite dans une ouverture (107) de l'appareil (10) qui débouche dans le compartiment frigorifique (13) et est dotée d'une prise (105), la partie de la tête de sortie (100) qui est prévue pour le passage de la crème étant placée dans le compartiment (13) lorsqu'elle est insérée.

5. Appareil selon la revendication 4, **caractérisé en ce que** la tête de sortie (100) est dotée d'une poignée (103) qui est coudée par rapport à la buse de sortie (101) et qui est conformée en crosse de pistolet, ainsi que d'une collerette d'insertion (104) qui ferme de façon étanche l'ouverture (107) débouchant dans le compartiment frigorifique (13) lorsque la tête est insérée de sorte que le compartiment frigorifique (13 ; 74) est fermé lorsque la tête de sortie (100) est mise en place.

6. Appareil selon la revendication 4 ou 5, **caractérisé en ce que** l'ouverture (107) dotée de la collerette d'insertion (105) débouche dans la région supérieure du compartiment frigorifique (13) où sont placés le récipient à crème (15), la conduite (18) amenant cette crème, le dispositif (11) permettant de générer la crème ainsi que la pompe (16).

7. Appareil selon la revendication 6, **caractérisé en ce que** le dispositif (11) est formé à partir d'un élément de passage de résistance et est divisé en deux portions montées l'une après l'autre et disposées parallèlement l'une à l'autre.

8. Appareil selon la revendication 1 ou 2, **caractérisé en ce que** la tête de sortie (40 ; 60) forme, une fois insérée, avec une conduite de raccordement réfrigérée (54) d'un dispositif frigorifique (30), placée dans l'appareil (10'), un pont thermique permettant de réfrigérer au moins sa paroi de tube (49) formant l'ouverture de passage de la crème.

9. Appareil selon la revendication 8, **caractérisé en ce que** la tête de sortie (40 ; 60) peut être fixée à un adaptateur (52), situé au niveau de la tête d'appareil (19), au moyen de connecteurs (44) montés sur ladite tête de sortie, l'adaptateur (52) étant raccordé à la conduite de raccordement réfrigérée (54) de sorte que, lorsque la tête de sortie (40 ; 60) est insérée, le froid est transmis aux connecteurs (44) et par conséquent à la paroi de tube (49) par l'intermédiaire d'une pièce de raccordement (55).

10. Appareil selon la revendication 1 ou 2, **caractérisé en ce que** le tuyau (25') peut s'escamoter automatiquement dans le compartiment frigorifique (13) au moyen d'un dispositif (20) qui est prévu dans le compartiment frigorifique (13) et qui comporte un rouleau (22) placé dans la tête d'appareil (19), un manchon (23) recevant à rotation ledit rouleau, un ressort hélicoïdal (24) coopérant avec le rouleau (22) ainsi qu'une portion de conduite (28) qui relie l'extrémité du tuyau (25'), située à l'opposé de la tête de sortie (40), au dispositif (11) monté dans l'appareil (10').

11. Appareil selon l'une des revendications précédentes, **caractérisé en ce qu'**un bouton-poussoir (106 ; 46 ; 72) est monté sur la tête de sortie (100 ; 40 ; 60) et permet, par son actionnement, d'une part de mettre en route ou d'arrêter une pompe (16) amenant la crème liquide et d'autre part d'ouvrir ou de fermer un clapet (43) placé dans la tête de sortie (100; 40 ; 60).

12. Appareil selon la revendication 11, **caractérisé en ce que** le bouton-poussoir (46) situé dans la tête de sortie (40) actionne un microcontact (48) qui est relié à un commutateur destiné à mettre en route ou arrêter un moteur électrique (17) entraînant la pompe (16) par l'intermédiaire d'un câble électrique (25') intégré dans le tuyau (25) ou par l'intermédiaire d'une transmission de signal sans fil, tel qu'un émetteur infrarouge (75, 76).

13. Appareil selon l'une des revendications 1 à 5, **caractérisé en ce que** le dispositif (62) est intégré directement dans la tête de sortie (60).
